(19) Europäisches Patentamt

European Patent Office

Office européen des brevets

(11) **EP 4 250 183 A1**

(12) **EUROPEAN PATENT APPLICATION**

(43) Date of publication:
**27.09.2023 Bulletin 2023/39**

(21) Application number: **22163330.8**

(22) Date of filing: **21.03.2022**

(51) International Patent Classification (IPC):
*G06N 3/08* (2023.01)          *G06N 3/04* (2023.01)
*B60W 30/095* (2012.01)          *B60W 60/00* (2020.01)

(52) Cooperative Patent Classification (CPC):
**G06N 3/082; B60W 30/0956; G06N 3/045;**
**G06N 3/048;** B60W 60/001

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Continental Autonomous Mobility
Germany GmbH
85057 Ingolstadt (DE)**

(72) Inventors:
• **Cui, Shiyong**
  **90411 Nürnberg (DE)**
• **Murali, Ashwath Narayan**
  **90411 Nürnberg (DE)**
• **Rackow, Kristian**
  **90411 Nürnberg (DE)**

(74) Representative: **Continental Corporation
c/o Continental Automotive GmbH
Intellectual Property
Nordostpark 30
90411 Nürnberg (DE)**

(54) **DRIVER-ASSISTANCE SYSTEM WITH NEURAL NETWORK**

(57)     The invention relates to a driver-assistance system (100) for a vehicle (110) comprising a processing unit (102) configured to receive information about objects on a road, map the objects (120, 122) into a grid, create a mathematical function based on the grid, wherein the mathematical function represents a path (402) for the vehicle (110) on the road, and guide the vehicle (110) along the path (402).

Fig. 1

**Description**

Technical Field

The invention relates to a driver-assistance system, a vehicle, a method for guiding a vehicle on a road and a use of a deep neural network for guiding a vehicle on a road with obstacles.

Background

Driver-assistance systems require a comprehensive understanding of the environment surrounding the vehicle. For example, common driving functions like forward collision avoidance system and emergency brake assist demand a precise prediction of the path the vehicle will follow in the next cycles. However, static and dynamic objects such as driving or parking vehicles, trees and bushes, walls, buildings, and other physical barriers may influence and restrict this path. Usual calculation of trajectories and path planning methods rely on known targets positions. In practical driving, objects in the surrounding are detected; however, such detections do not provide target position a vehicle shall drive to.

Summary

Therefore, one object of the invention may be to provide an improved driver-assistance system.

The problem is solved by the subject-matter of the independent claims. Embodiments are provided by the dependent claims, the following description and the accompanying figures.

The described embodiments similarly pertain to the driver-assistance system, the vehicle, the method for guiding a vehicle on a road and the use of a deep neural network for guiding a vehicle on a road with obstacles. Synergetic effects may arise from different combinations of the embodiments although they might not be described in detail.

Further on, it shall be noted that all embodiments of the present invention concerning a method might be carried out with the order of the steps as described, nevertheless this has not to be the only and essential order of the steps of the method. The herein presented methods can be carried out with another order of the disclosed steps without departing from the respective method embodiment, unless explicitly mentioned to the contrary hereinafter.

According to a first aspect, a driver-assistance system for a vehicle is provided. The driver-assistance system comprises a processing unit configured to receive information about objects on a road, map the objects into a grid, create a mathematical function based on the grid, wherein the mathematical function represents a path for the vehicle on the road, and to guide the vehicle along the path.

In other words, a grid is created that is populated with information about the objects on the road is created. The grid may be based on an image such that the entries of the grid correspond to detected objects on the image. The processing unit uses the grid as input and provides a mathematical function as output, where the mathematical function represents the path. Thereby, the mathematical function is not a trajectory or a series of trajectories each comprising a starting position and a target position. Instead, the mathematical function represents a continuous path, which is fitted such that the objects are circumnavigated or bypassed in an optimal way. The mathematical function is updated, for example, in regular intervals.

According to an embodiment, the processing unit comprises a neural network, wherein the input of the neural network is the grid and the output of the neural network is a representation of the mathematical function.

Technically, the driving course prediction may be formulated as a regression issue in the context of deep machine learning, which learns a mapping function from the input data to the out vector. The deep machine learning may be a neural network that only requires the grid as input such that no target position has to be determined for calculating a trajectory. Determining target positions may be laborious and inexact. In conventional systems, the type of object is not discriminated and several target positions and stepwise trajectories have to be calculated in order to provide a sufficiently long prevision. By using a neural network as described herein, the output is a mathematical function without steps defined by target positions. The driver-assistance system can use the mathematical function for guiding the vehicle and for preparing actions without limitation regarding the length of the predicted path. Further, the described neural network, can take the different behavior of static and dynamic objects can into account.

According to an embodiment, the grid is composed as a numerical tensor, in which each cell corresponds to an area of the road and comprises a numerical number corresponding to an occupation probability of the area.

The grid is mathematically spoken a tensor, where each grid cell is identified by its position in two dimensions of the tensor. The grid corresponds to a grid laid over an image containing the static and dynamic objects in the environment of the vehicle. That is, each grid cell corresponds to an area on the image. In a simple case, the tensor is a two-dimensional vector, i.e., a matrix. The values of the matrix are the occupation probability, i.e. the probability, that an object occupies the corresponding area on the image. More generalized, the more-dimensional tensor may contain further information for each cell such as original values of the image, for example, color values or grey scale values.

The probability values may be obtained by preprocessing the image. In a simple case, as an illustrative example, the probability values correspond to grey scale values or similar and may be one when exceeding a threshold or zero otherwise. However, a much more complex mapping of the content of the image to probabilities may be applied.

According to an embodiment, the mathematical function is a polynomial.

The polynomial does not need to have support points, as it might be the case for trajectories with target positions. Especially, when using a neural network, the network determines the polynomial, and there are no target positions to be met.

According to an embodiment, the mathematical function is represented by a vector containing coefficients of the polynomial, and the output of the neural network is the vector containing the coefficients. The mathematical function may be, however, any suitable type of function that defines a curve with coefficients or parameters.

The actual output of the neural network may be a vector containing coefficients of the polynomial. The coefficients represent the mathematical function.

According to an embodiment, the neural network is a deep neural network comprising several convolutional layers, wherein each convolutional layer is followed by a max-pooling layer.

The number of convolutional layers may be two, preferably three, or more layers. The max-pooling layers after each convolutional layer reduce the dimension of the system. The convolutional layers may be followed by a flattening layer and one or several fully connected layers. A non-linear activation may be applied for each convolutional layer. A non-linear activation may be also be applied for the flattening layer and the following fully connected layers. Preferably, the non-linear activation is a parametric rectifying Linear Unit (PReLU), where the neurons may learn the parameter $\alpha$ for obtaining the best slope in the negative region, that is, the gradient $\alpha$ for values of linear sum z = w1 x1 + w2 x2 + ... + wn xn + b < 0, where wi are the weights and x the output values of the filter applied to the convolutional layer. However, also any other activation functions may be used, such as sigmoid, thanh, maxout, Exponential Linear Unit (ELU), softmax, etc.

In order to reduce overfitting, dropout layers may follow the flattening layer and each of the fully connected layers. The drop probability may be, for example, 0.5.

Furthermore, an L1 regularization may be applied for all layers. Preferably, for the reduction of the weights, a factor of 0.01 is applied.

According to an embodiment, the output layer comprises a linear activation function. The linear activation function takes into account that a regression problem has to be resolved, where the output are the real values of polynomial coefficients. Alternatively, a particular processing may be applied when using other types of activation functions.

According to an embodiment, a loss function is defined based on the difference between the polynomial defined by the output of the neural network and a polynomial representation of a real curve.

The real curve here is a kind of ground truth data, which is the real ego driving path in this case. As the real ego path is known, the coefficients of the ego path are obtained via a polynomial fitting to the real ego path.

According to an embodiment, the loss function is given as

$$L(f-g,K) = <f-g, f-g>$$
$$= \int_{x=0}^{L} \big(f(x)-g(x)\big)\big(f(x)-g(x)\big)K(x)dx$$

wherein

$$f(x) = \sum_{k=0}^{N} f_k x^k \text{ and } g(x) = \sum_{k=0}^{N} g_k x^k;$$

with $f_k$ and $g_k$ being the polynomial coefficients, x the distance from the ego-vehicle, k the exponents of the polynomial, L a distance of interest, and K(x) being a factor depending on x or constant, and N a grade of the polynomial.

In words, the loss function is defined by an integral over the squared differences of the real ego-path and the path predicted by the neural network, wherein the real ego-path and predicted path are represented as polynomials.

The neural network is trained using a gradient descend algorithm based on this loss function. In order to improve the convergence when training a deep neural network model, a learning rate decreasing schedule is applied.

According to an embodiment, the driver-assistance system further comprises a camera, wherein the camera is configured to provide an image with the information about the objects to the processing unit.

The camera captures an image of the environment of the ego-vehicle, including the road and objects in and along the road. The camera may also be a stereo camera to improve the detection and localization of objects. In addition, other sensors such as Radar, Lidar, ultrasonic sensors, etc. may provide additional information that may be used for calculating the probabilities.

Further, the camera may capture a series of images such that moving objects can be identified. For example, other vehicles driving along the road in the same direction shall not be bypassed. As another example, the movement of pedestrians may be predicted and taken into account when calculating the occupation probability. The series of images may be captured at short intervals and a single series may be used for one occupation probability calculation. The time distance between two such series may be, for example, the same time interval or a longer interval. Alternatively, moving objects may be identified by a series corresponding to the update rate of the path. That is, in this case, each image is used for an object recognition and a determination of the occupation probabilities. Moving objects may be identified by comparison with the previous image.

According to an embodiment, the processing unit is further configured to divide the image by the grid into the grid cells and to determine for each grid cell the occupation probability.

The grid may cover the complete image captured by the camera or only a part of it. The number of grid cells may be a fixed configured number. The number of grid cells may depend on the intended resolution.

According to an embodiment, the processing unit comprises image processing routines or a further neural network to determine the occupation probabilities.

Usual routines may be used to recognize and determine objects in an image. If a further neural network is used, this network may preferably be a convolutional neural network.

According to a further aspect, a vehicle is provided that comprises a driver-assistance system as described herein.

According to a further aspect, a method for guiding a vehicle on a road is provided. The method comprises the following steps performed by a processing unit of a driver-assistance system. In a first step, information about objects on a road is received. In a second step, the objects are mapped into a grid. In a third step, a mathematical function is created from the grid, wherein the mathematical function represents a path for the vehicle on the road. In a fourth step, the processing unit guides the vehicle along the path.

The method may further comprise any other step or action described herein. The processing unit is defined such that it can perform all the steps mentioned above. Therefore, the processing unit may be a virtual logic in a connected system comprising one or several processors, wherein the one or several processors may be located in one or more different devices. For example, the driving control for guiding the vehicle may be physically separated from a unit that determines the path; nevertheless, these devices are defined as "processing unit" herein.

According to a further aspect, a use of a deep neural network for guiding a vehicle on a road with obstacles.

The obstacles are objects on the road.

The deep neural network is a convolutional neural network with an input layer populated with occupation probability values. The architecture of the deep neural network comprises several convolutional layers and several fully connected layers, and has an output layer that outputs coefficients of a polynomial that predicts the path along which the vehicle will be guided. The deep neural network is a neural network as descibed herein.

These and other features, aspects and advantages of the present invention will become better understood with reference to the accompanying figures and the following description.

Short description of the figures

Fig. 1 shows a diagram of a typical scenario.

Fig. 2 shows a diagram of a driver-assistance system.

Figs. 3a to 3c show a diagram with an example of a deep neural network according to an embodiment.

Fig. 4 shows a diagram of occupied cells and predicted path using real data.

Fig. 5 shows a block diagram of vehicle with a driver-assistance system.

Fig. 6 shows a flow diagram of a method according to an embodiment.

Detailed Description of Embodiments

Corresponding parts are provided with the same reference symbols in all figures.

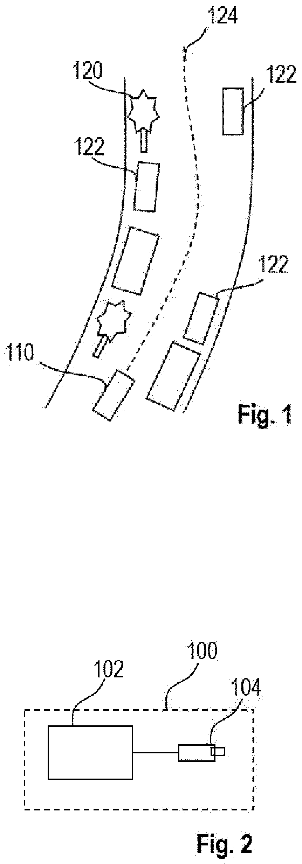

Fig. 1 shows a diagram of a typical scenario, in which the invention is applied. On the road shown in Fig. 1, there are trees 120 and parking cars 122 on the left side and parking cars 122 on the right side. The dashed line 124 shows a suitable path along which a vehicle 110, here also referred to as "ego-vehicle" 110, may drive, with sufficient distance to the objects 120, 122. In order to determine the path 124, an image is taken of the environment by, for example, a camera mounted on the ego-vehicle 100. Further, a grid is laid over the image. The objects 120, 122 are detected and an occupation probability is determined for each cell of the grid. These probabilities for each grid cell are the input in the form of, for example, a matrix or, more generally, as a tensor for a deep convolutional neural network with an architecture as shown in Fig. 2.

Fig. 2 shows a block diagram of a driver-assistance system 100 with a processing unit 102 on which the neural network is implemented and a camera that provides the information from which the input for the neural network is calculated.

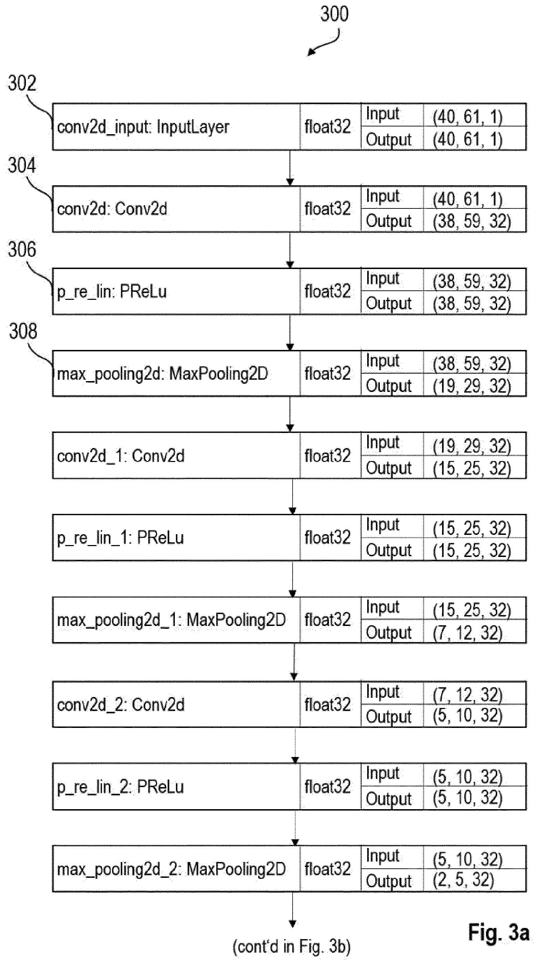

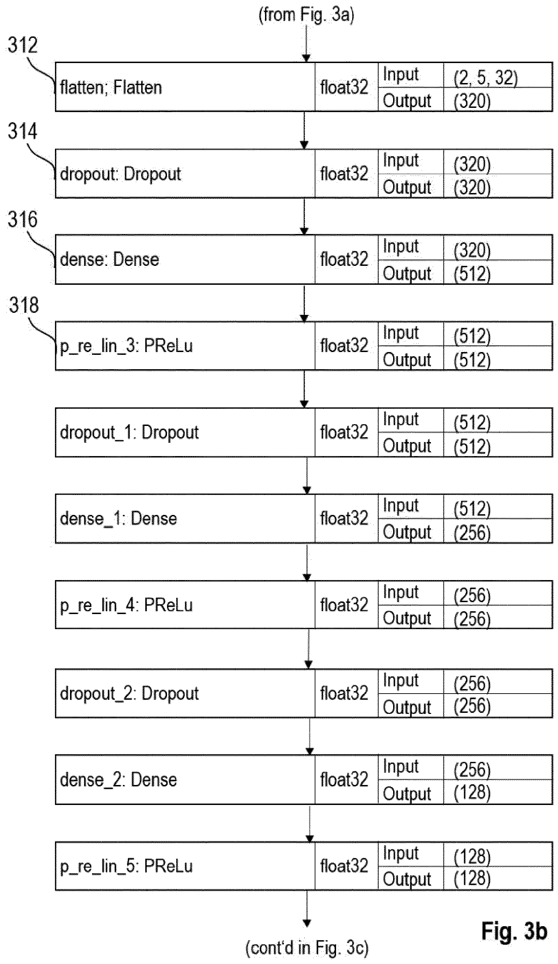

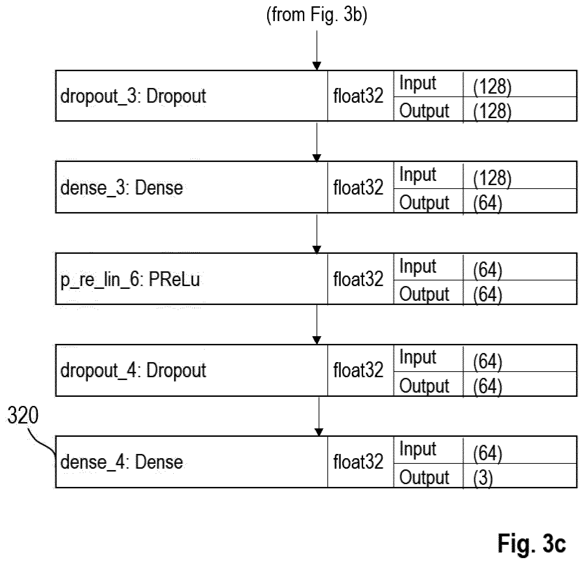

Figs. 3a to 3c show an example of a deep convolutional neural network architecture 300 according to an embodiment. The architecture 300 comprises an input layer 302 with float32-values comprised in a matrix of size 40 x 61. The matrix corresponds to a grid applied to an image. For each cell of the grid, a probability of an area in the image, corresponding to an area on or near the road and that the area is occupied by an object has been determined. The float32-values of the input layer 302 represent these probabilities. The Input layer 302 is followed by a convolutional layer 304 to which 32 filters are applied such that the output are 32 feature maps, each of size 38x59. Each feature map is activated by a PReLu activation function 306. A max-pooling layer 308 halves the size of the feature maps. These steps are repeated for two further convolutional layers resulting in 32 feature maps of size 2x5. In a next step 312, as shown in Fig. 3b, the feature maps are flattened to a vector of size 320. The flattening layer is followed by a dropout 314 and a dense 316 layer, and further by a PReLU 318 activation function, whose output is the input for a next sequence of dropout and a dense layer. Note that for the dropout layer, the input dimension is the same as output dimension, since the dropout layer may be used only in the learning phase to avoid overfitting. In the predication phase after learning, the usage of the dropout layer may be omitted. The output size of the first dense layer is 512, which is halved in each sequence until the size is 64. The last dense layer 320, as shown in Fig. 3c, reduces the output to three. Finally, a linear activation function (not shown in Fig. 3c) is applied to the output layer 320. The three output values are the coefficients of the polynomial representing the desired driving path. For all layers in the architecture, L1 regularization with a parameter of 0.01 is applied.

In the learning phase, a loss function is defined based on the difference between the real curve expressed as a polynomial

$$g(x) = \sum_{k=0}^{N} g_k x^k$$

and the polynomial with the coefficients output by the neural network $f(x) = \sum_{k=0}^{N} f_k x^k$ in the following way:

$$L(f - g, K) = <f - g, f - g>$$
$$= \int_{x=0}^{L} \big(f(x) - g(x)\big)\big(f(x) - g(x)\big)K(x)dx \quad ;$$

where $f_k$ and $g_k$ are the polynomial coefficients, x is the distance from the ego-vehicle, k the exponents of the polynomial, L a distance of interest, and K(x) is a factor depending on x or constant, and N a grade of the polynomial.

Applying the substitutions h(x) = f(x) - g(x) on the left side, and $h_k = f_k - g_k$ on the right side results in:

$$h(x) = \sum_{k=0}^{N} h_k x^k .$$

Then, the loss function can be written as

$$L(h, K) = <h, h \geq = \sum_{i=0}^{N} \sum_{j=0}^{N} h_i h_j \int_{0}^{L} x^{i+j} K(x)dx = \sum_{i=0}^{N} \sum_{j=0}^{N} h_i h_j S_{ij}$$

wherein, when choosing K(x) = 1/L,

$$S_{ij} = \frac{1}{L}\int_0^L x^{i+j}dx = \frac{1}{L}\frac{x^{(i+j+1)}}{(i+j+1)}\Big|_0^L = \frac{L^{i+j}}{i+j+1}$$

Based on this loss function, the deep neural network 300 shown in Figs. 3a to 3c is trained using the gradient descend algorithm with a small learning rate of $1e^{-4}$.

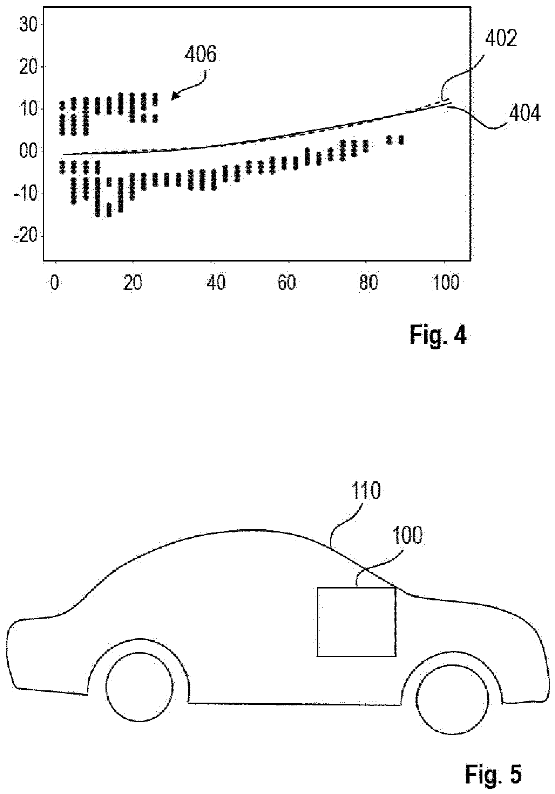

A typical result is shown in Fig. 4. The solid line 404 is the real ego driving path while the dashed line 402 is the learned driving course using the designed deep neural network 300 shown in Figs. 3a to 3c. The black dots 406 in Fig. 4 represent occupied cells on the grid. Each dot had been assigned a probability value (not shown in Fig. 4) as input for the input layer 302 of the neural network 300. It can be seen that the learned driving course or learning path 402, respectively, is very close to the real ego driving path 404.

Fig. 5 shows a block diagram of vehicle 110 that comprises a driver-assistance system 100.

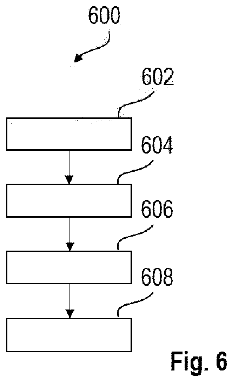

Fig. 6 shows a flow diagram of a method 600 for guiding a vehicle 110 on a road according to an embodiment. The method 600 comprises the following steps performed by a processing unit 102 of a driver-assistance system 100. In a first step 602, information about objects on a road is received. In a second step 604, the objects are mapped into a grid. In a third step 606, a mathematical function is created from the grid, wherein the mathematical function represents a path for the vehicle on the road. In a fourth step 608, the processing unit guides the vehicle along the path.

The method may include further steps as described herein, especially with respect to the driver-assistance system.

The presented aspects of the invention allow for predicting the driving course without manually designing cost functions. The model of the neural network can be updated as soon as new data is available. Due to the data-driven approach, the application cases and scenarios are not restricted, and no target positions are required.

Other variations to the disclosed embodiments can be understood and effected by those skilled in the art in practicing the claimed invention, from the study of the drawings, the disclosure, and the appended claims. In the claims, the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. Any reference signs in the claims should not be construed as limiting the scope of the claims.

List of Reference signs

| | |
|---|---|
| 100 | driver-assistance system |
| 102 | processing unit |
| 104 | camera |
| 110 | ego-vehicle |
| 120 | objects on the road: trees |
| 122 | objects on the road: parking vehicles |
| 124 | predicted path |
| 300 | neural network (architecture) |
| 302 | input layer of the neural network |
| 304 | convolutional layer of the neural network |
| 306 | PReLu function of the neural network |
| 308 | max-pooling layer of the neural network |
| 312 | flattening layer of the neural network |
| 314 | dropout layer of the neural network |
| 316 | dense layer (fully connected layer) of the neural network |
| 306 | PReLu function of the neural network |
| 320 | output layer of the neural network |
| 402 | predicted path |
| 404 | real path |
| 406 | occupied cells |
| 600 | method |
| 602 | first step of the method |
| 604 | second step of the method |

606     third step of the method
608     fourth step of the method

## Claims

1.  Driver-assistance system (100) for a vehicle (110) comprising a
    Processing unit (102) configured to

    receive information about objects on a road;
    map the objects (120, 122) into a grid;
    create a mathematical function based on the grid, wherein the mathematical function represents a path (402) for the vehicle (110) on the road;
    guide the vehicle (110) along the path (402).

2.  Driver-assistance system (100) according to claim 1, wherein the processing unit (102) comprises a neural network (300), wherein the input of the neural network (300) is the grid and the output of the neural network (300) is a representation of the mathematical function.

3.  Driver-assistance system (100) according to claim 1 or 2, wherein the grid is composed as a numerical tensor, in which each grid cell corresponds to an area of the road and comprises a numerical number corresponding to an occupation probability of the area.

4.  Driver-assistance system (100) according to any one of the previous claims, wherein the mathematical function is a polynomial.

5.  Driver-assistance system (100) according to claim 4, wherein the mathematical function is represented by a vector containing coefficients of the polynomial, and the output of the neural network (300) is the vector containing the coefficients.

6.  Driver-assistance system (100) according to claim 5, wherein neural network (300) is a deep neural network (300) comprising several convolutional layers, wherein each convolutional layer is followed by a max-pooling layer.

7.  Driver-assistance system (100) according to any one of claims 2 to 6, wherein an output layer (320) comprises a linear activation function.

8.  Driver-assistance system (100) according to anyone of claims 4 to 7, wherein a loss function is defined based on the difference between the polynomial defined by the output of the neural network (300) and a polynomial representation of the real curve.

9.  Driver-assistance system (100) according to claim 8, wherein the loss function is given as

$$L(f-g, K) = < f-g, f-g >$$
$$= \int_{x=0}^{L} (f(x) - g(x))(f(x) - g(x))K(x)dx$$

    wherein

$$f(x) = \sum_{k=0}^{N} f_k x^k \text{ and } g(x) = \sum_{k=0}^{N} g_k x^k$$

    where fk and gk are the polynomial coefficients, x is a variable for a distance from the ego- vehicle (110), k running from 0 to N are the exponents of the polynomial, L is a distance of interest, K(x) is a factor depending on x or a constant factor, and N is a grade of the polynomial.

10. Driver-assistance system (100) according to claim 1, further comprising a camera (104), wherein the camera (104) is configured to provide an image with the information about the objects to the processing unit.

11. Driver-assistance system (100) according to any one of claims 3 to 10, wherein the processing unit is further configured to divide the image by the grid into the grid cells and to determine for each grid cell the occupation probability.

12. Driver-assistance system (100) according to claim 11, wherein the processing unit comprises image processing routines or a further neural network (300) to determine the occupation probabilities.

13. Vehicle (110) comprising a driver-assistance system according to any one of the preceding claims.

14. Method (600) for guiding a vehicle (110) on a road comprising the steps performed by a processing unit of a driver-assistance system (100):

> receiving (602) information about objects on a road;
> mapping (604) the objects into a grid;
> creating (606) a mathematical function from the grid, wherein the mathematical function represents a path (402) for the vehicle (110) on the road;
> guiding (608) the vehicle (110) along the path (402).

15. Use of a deep neural network (300) for guiding a vehicle (110) on a road with obstacles (120, 122).

124

120

122

122

110

122

**Fig. 1**

102

100

104

**Fig. 2**

300

302

| conv2d_input: InputLayer | float32 | Input | (40, 61, 1) |
| | | Output | (40, 61, 1) |

304

| conv2d: Conv2d | float32 | Input | (40, 61, 1) |
| | | Output | (38, 59, 32) |

306

| p_re_lin: PReLu | float32 | Input | (38, 59, 32) |
| | | Output | (38, 59, 32) |

308

| max_pooling2d: MaxPooling2D | float32 | Input | (38, 59, 32) |
| | | Output | (19, 29, 32) |

| conv2d_1: Conv2d | float32 | Input | (19, 29, 32) |
| | | Output | (15, 25, 32) |

| p_re_lin_1: PReLu | float32 | Input | (15, 25, 32) |
| | | Output | (15, 25, 32) |

| max_pooling2d_1: MaxPooling2D | float32 | Input | (15, 25, 32) |
| | | Output | (7, 12, 32) |

| conv2d_2: Conv2d | float32 | Input | (7, 12, 32) |
| | | Output | (5, 10, 32) |

| p_re_lin_2: PReLu | float32 | Input | (5, 10, 32) |
| | | Output | (5, 10, 32) |

| max_pooling2d_2: MaxPooling2D | float32 | Input | (5, 10, 32) |
| | | Output | (2, 5, 32) |

**Fig. 3a**

(from Fig. 3a)

312

| flatten; Flatten | float32 | Input | (2, 5, 32) |
| | | Output | (320) |

314

| dropout: Dropout | float32 | Input | (320) |
| | | Output | (320) |

316

| dense: Dense | float32 | Input | (320) |
| | | Output | (512) |

318

| p_re_lin_3: PReLu | float32 | Input | (512) |
| | | Output | (512) |

| dropout_1: Dropout | float32 | Input | (512) |
| | | Output | (512) |

| dense_1: Dense | float32 | Input | (512) |
| | | Output | (256) |

| p_re_lin_4: PReLu | float32 | Input | (256) |
| | | Output | (256) |

| dropout_2: Dropout | float32 | Input | (256) |
| | | Output | (256) |

| dense_2: Dense | float32 | Input | (256) |
| | | Output | (128) |

| p_re_lin_5: PReLu | float32 | Input | (128) |
| | | Output | (128) |

**Fig. 3b**

(from Fig. 3b)

| dropout_3: Dropout | float32 | Input | (128) |
|---|---|---|---|
| | | Output | (128) |

| dense_3: Dense | float32 | Input | (128) |
|---|---|---|---|
| | | Output | (64) |

| p_re_lin_6: PReLu | float32 | Input | (64) |
|---|---|---|---|
| | | Output | (64) |

| dropout_4: Dropout | float32 | Input | (64) |
|---|---|---|---|
| | | Output | (64) |

320

| dense_4: Dense | float32 | Input | (64) |
|---|---|---|---|
| | | Output | (3) |

Fig. 3c

**Fig. 4**

**Fig. 5**

600

602

604

606

608

**Fig. 6**

Europäisches
Patentamt

European
Patent Office

Office européen
des brevets

# EUROPEAN SEARCH REPORT

Application Number

EP 22 16 3330

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/176818 A1 (VOLVO CAR CORP [SE]) 13 June 2019 (2019-06-13) * figures 1-6 * * paragraphs [0007], [0067] – [0098] * | 1-15 | INV. G06N3/08 G06N3/04 B60W30/095 |
| X | T. BUHET ET AL.: "Conditional Vehicle Trajectories Prediction in CARLA Urban Environment", 2019 IEEE/CVF INTERNATIONAL CONFERENCE ON COMPUTER VISION WORKSHOP (ICCVW), 27 October 2019 (2019-10-27), pages 2310-2319, XP033732609, DOI: 10.1109/ICCVW.2019.00284 [retrieved on 2020-03-02] * sections 2, 3.1, 3.2 and 4.1 * | 1-15 | ADD. B60W60/00 |
| A | Z. SU ET AL.: "Temporally-Continuous Probabilistic Prediction using Polynomial Trajectory Parameterization", 2021 IEEE/RSJ INTERNATIONAL CONFERENCE ON INTELLIGENT ROBOTS AND SYSTEMS (IROS), 27 September 2021 (2021-09-27), pages 3837-3843, XP034051445, DOI: 10.1109/IROS51168.2021.9636751 [retrieved on 2021-12-03] * sections II, III-A and III-C * | 1-15 | |

TECHNICAL FIELDS
SEARCHED      (IPC)

G06N

The present search report has been drawn up for all claims

| Place of search | Date of completion of the search | Examiner |
|---|---|---|
| The Hague | 1 September 2022 | Millet, Guillaume |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

.......................................................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 22 16 3330

01-09-2022

| Patent document cited in search report | | Publication date | Patent family member(s) | | Publication date |
|---|---|---|---|---|---|
| US 2019176818 | A1 | 13-06-2019 | CN    110001658 | A | 12-07-2019 |
| | | | EP      3495219 | A1 | 12-06-2019 |
| | | | US   2019176818 | A1 | 13-06-2019 |

EPO FORM P0459